# EUROPÄISCHE PATENTSCHRIFT

(11) **EP 1 580 133 B1**
(45) Veröffentlichungstag und Bekanntmachung des Hinweises auf die Patenterteilung: **07.04.2010**
(21) Anmeldenummer: 04017777.6
(22) Anmeldetag: 27.07.2004
(51) Int. Cl.: B65B 69/00, B65G 53/42

(54) **Verfahren und Vorrichtung zum Entleeren von Schüttgut**
Method and apparatus for discharging bulk materials
Procédé et dispositif de déchargement de produit en vrac

(30) Priorität: 26.03.2004 DE 102004015014
(43) Veröffentlichungstag der Anmeldung: 28.09.2005
(73) Patentinhaber: Helios Gerätebau für Kunststofftechnik GmbH, 83022 Rosenheim (DE)
(72) Erfinder: Wilhelm, Klaus, 83026 Rosenheim (DE)
(74) Vertreter: Alber, Norbert

(56) Entgegenhaltungen:
- EP-A- 0 033 832
- EP-A- 0 761 566
- EP-A- 0 765 829
- DE-A1- 3 920 635
- DE-A1- 4 021 674
- DE-A1- 19 506 538
- DE-U1- 8 805 947
- DE-U1- 29 803 070
- DE-U1- 29 823 358

## Beschreibung

### I. Anwendungsgebiet

Die Erfindung betrifft eine Vorrichtung und ein Verfahren zum Entleeren von Schüttgut aus flexiblen, insbesondere sack- oder beutelartigen Behältnissen.

### II. Technischer Hintergrund

In vielen technischen Bereichen liegen die zu verarbeitenden Ausgangsprodukte als Schüttgut vor. Dies ist z.B. der Fall beim Rohmaterial für Spritzgussmaschinen, in denen Kunststoff verspritzt wird, wobei das Kunststoff-Granulat oder -Pulver in der Regel in sogenannten Big-Bags, also großen sackartigen Behältnissen, angeliefert wird.

Eine andere Anlieferungsform sind sogenannte Oktabins, also Behälter mit einer festen, achteckigen Umfangswand, in denen der flexible Innenbehälter in Form eines Foliensackes, der mit Granulat gefüllt ist, angeordnet ist.

Gleiches gilt für andere Verwendungszwecke wie etwa PVC-Pulver für die Herstellung von PVC-Kunststoffteilen und Harzrohstoffen als Rohmaterial für die Herstellung von Klebstoffen.

Entleervorrichtungen bestehen dabei üblicherweise aus einem galgenförmigen oder portalförmigen Grundgestell, unter welches der Behälter gestellt wird. Vom Grundgestell aus wird von oben her eine Absaugvorrichtung in das oben offene Behältnis eingeführt, und mittels Absaugen über einen Absaugschlauch das Schüttgut zur gewünschten Stelle transportiert.

Als Absaugvorrichtung dient im einfachsten Fall ein Saugrohr, welches jedoch an seinem vorderen Ende nur einen kleinen Durchmesser besitzt und deshalb über den demgegenüber vergleichsweise großen Oberflächenbereich des Behälters, der größer als 1 m² sein kann, in Querrichtung und auch in der Vertikalen von einer Bedienperson nachgeführt werden muss.

Weitere Probleme liegen im Ansaugen des Foliensackes durch das Saugrohr und das mangelnde Nachrutschen des Schüttgutes bei nur noch geringem Restfüllstand im Gebinde.

Deshalb wird anstelle eines einfachen Saugrohres häufig ein demgegenüber verbreiterter Saugkopf verwendet, der mit einer größeren Außenfläche am umgebenden Schüttgut anliegt oder auf diesem Schüttgut schwimmt, wobei vorzugsweise noch Vibrationen in das Schüttgut eingebracht werden, um dieses überhaupt oder besser rieselfähig zu machen, da die Vibrationen eine Fluidisierung des Granulates bewirken sollen.

Gleichzeitig wird das sackartige, flexible Behältnis am oberen Rand hochgezogen, wodurch die Flanken des Behältnisses zunehmend steiler werden, was noch dadurch begünstigt werden kann, dass der Halterahmen, an dem der obere Rand des Behältnisses befestigt wird, einen geringeren Durchmesser besitzt als das flexible Behältnis im gefüllten Zustand.

Dennoch gibt es Schüttgüter, deren Körner eine sehr hohe Reibung gegeneinander sowie gegenüber einem anderen Gegenstand, etwa einer Absaugvorrichtung, besitzen, so dass trotz aller vorgenannter Maßnahmen unterhalb der Absaugvorrichtung bei solchen Schüttgütern ein so großer Freiraum mangels Nachrutschen von Schüttgut entstehen kann, dass ein weiteres Absaugen nicht gelingt.

Daneben sind auch einfachere Entleervorrichtungen bekannt, bei denen - wiederum nur mit Hilfe des beschriebenen einfachen Saugrohres - der Behälter leergesaugt werden soll und zu diesem Zweck der Behälter auf einer Grundplatte steht, die gekippt und dadurch schräg gestellt werden soll, um ein Sammeln des Schüttgutes in der tiefliegenden Ecke und dortiges Absaugen zu ermöglichen, was jedoch nur bei leicht handhabbaren Materialien funktioniert.

Bekannt ist es zum Entleeren von Pulver aus Big-Bags, einen Saugkopf in den Big-Bag einzuführen und das Pulver um die Absaugöffnung herum zu fluidisieren durch Einblasen von Luft. Der Behälter wird dabei an der Oberseite abgedichtet, was möglich ist, da die Saugköpfe meist von Anfang an auf den Grund des noch vollen Big-Bags abgesenkt werden, was bei einem Pulver in der Regel möglich ist.

Auch das Nachfließen der Wände um ein entstehendes Absaugloch herum bereitet wenig Probleme, da ein Pulver auch bei relativ gering geneigten Wänden noch gut zur Mitte des Loches hin nachfließt.

Derartige Pulverentleervorrichtungen zeigen die Schriften DE 195 06 538 A, DE 88 05 947 U, DE 40 21 674 A, DE 39 20 635 A und EP 0 033 832 A.

Einzelne, stark aneinander haftende Granulatkörner bewirken jedoch steil stehende, nicht nachrutschende Wände um ein Absaugloch herum und erfordern sehr kraftvolle punktuelle Druckluftstrahlen, um diese Haftung aufzulösen.

### III. Darstellung der Erfindung

### a) Technische Aufgabe

Es ist daher die Aufgabe gemäß der vorlegenden Erfindung, ein Verfahren sowie eine diesbezügliche Vorrichtung zu schaffen, die auch bei nicht bzw. schwer rieselfähigen Schüttgütern ein Absaugen mit geringe Staubentwicklung aus den bekannten, oben offenen flexiblen Behältnissen nach oben ohne manuelle Unterstützung ermöglichen.

### b) Lösung der Aufgabe

Diese Aufgabe wird durch die Merkmale der Ansprüche 1 bzw. 7 gelöst. Vorteilhafte Ausführungsformen ergeben sich aus den Unteransprüchen.

Das Schüttgut wird in der Umgebung der Absaugvorrichtung durch Beaufschlagen mittels Druckluft gelockert, also die Partikel voneinander gelöst, um deren Nachrutschen in Richtung Absaugöffnung zu erleichtern oder gar zu fördern, letzteres indem die Richtung der Drucklufteinbringung eine abwärts gerichtete Komponente aufweist.

Konkret bildet sich beim Absaugen des Schüttgutes von dessen Oberfläche her ein Absaugloch, dessen Wände bei zu starkem Aneinanderhaften der Partikel nicht mehr nachrutschen, so dass die Druckluft, vorzugsweise in Form einzelner, möglich kraftvoller und daher punktueller Druckluftstrahlen, gegen die Wand des Absaugloches gerichtet sind, vorzugsweise von der Absaugvorrichtung, beispielsweise dem Saugkopf aus, ausgehend.

Um dabei einen nennenswerten Abtrag zu erzeugen, werden vorzugsweise mehrere Druckluftstrahlen, z. B. über den Umfang der Saugvorrichtung verteilt und/oder über deren Höhe verteilt, angeordnet.

Um über eine ausreichende Kraftwirkung im Schüttgut zu erzeugen, sind die Druckluftstrahlen vorzugsweise mit einer geringen Auftrefffläche und damit mit einer Spitzkegelcharakteristik, also möglichst punktuell, ausgebildet, und der Strahl tritt mit einem Druck von 2 - 8, insbesondere 4 - 6 bar aus der Düse aus.

Die Richtung der Düsen ist vorzugsweise schräg nach unten gerichtet, beispielsweise unter einem Winkel von 20 - 80°, insbesondere von 30 - 60°, insbesondere von 40 - 50°.

Die Beaufschlagung mit Druckluft muss nicht ständig erfolgen, sondern vorzugsweise nur dann, wenn die Absaugvorrichtung aktiviert ist, also mit Unterdruck beaufschlagt ist, da sonst das in Bewegung gebrachte Granulat zuviel Staub an die Umgebung abgeben würde, der dann nicht von der Absaugvorrichtung aufgesaugt würde, was für die Menschen in der Umgebung nicht zumutbar oder gar gefährlich ist. Dementsprechend ist auch während des Absaugvorganges das von der Absaugvorrichtung abgeförderte Luftvolumen pro Zeiteinheit größer als das von der Druckluftbeaufschlagung zugeführte Luftvolumen.

Auch während der prinzipiell aktivierten Phase der Druckluftbeaufschlagung muss diese Druckluftbeaufschlagung nicht permanent geschehen. Auch stoßweise Beaufschlagung kann zu einem annähernd gleichen Effekt, jedoch mit geringerem Druckluftverbrauch, führen. Dauer und Abstand der einzelnen Druckluftstöße können manuell eingestellt werden, beispielsweise in Abhängigkeit der Art und des Zustandes des zu lösenden Granulates, oder auch automatisch gesteuert in Abhängigkeit von der durch den Saugschlauch abgeführten Menge an Schüttgut pro Zeiteinheit, was durch einen Sensor automatisch erfasst werden kann.

Zusätzlich kann das Absaugen gefördert werden, indem die Absaugvorrichtung selbst oder der Untergrund des Behältnisses Vibrationen in das Granulat einbringt und/oder die Absaugvorrichtung immer wieder, vorzugsweise periodisch und automatisch, angehoben, entweder nur innerhalb des Absaugloches angehoben oder bis über die Oberkante des Absaugloches angehoben und anschließend wieder auf das Schüttgut, also z. B. den Boden des Absaugloches, abgesenkt wird, vorzugsweise jedoch seitlich versetzt zur ursprünglichen Position.

Auch eine Schrägstellung der Grundplatte, auf der der Schüttgutbehälter steht, ist möglich.

Dabei besteht das Ziel darin, den Umgebungsbereich der Absaugvorrichtung trotz der einzelnen Punkteeinwirkung des einzelnen Druckluftstrahles flächig zu bearbeiten, um möglichst auf der gesamten Fläche des Absaugloches ein Vereinzeln der Partikel und damit ein Nachrutschen des Schüttgutes nach unten in Richtung Absaugöffnung des Saugkopfes zu ermöglichen. Zu diesem Zweck muss der Wirkungsbereich der Düsen nicht die Absaugöffnung selbst erreichen, und die Wirkungsbereiche müssen sich auch nicht direkt aneinander anschließen, da bei punktueller Auflockerung auch die Bereiche zwischen den einzelnen Auflockerungsbereichen an Stabilität verlieren und anschließend ebenfalls einstürzen.

Dennoch kann die flächige Wirkung durch Unterschiedliche Maßnahmen vergrößert werden, sei es durch kreisende Strahlrichtung der Druckluftdüsen oder durch mechanische Vorrichtungen, z. B. Leitvorrichtungen, die ihre Richtung ändern.

Auch in diesem Zusammenhang ist es hilfreich, die Unterseite der Saugvorrichtung kegelförmig oder kegelstumpfförmig auszubilden, da dies einer Annäherung an einen sich bildenden nachrutschenden umgekehrten Kegel als Absaugloch am nächsten kommt, und hierdurch das Nachrutschen zur Absaugöffnung erleichtert wird.

Diese Kegelform kann jedoch auch anders erreicht werden, indem beispielsweise die weiter oben angeordneten Düsen, trotz gleichen radialen Abstandes zur vertikalen Mitte der Saugvorrichtung, einen größeren radialen Wirkungsbereich aufweisen als die tieferliegenden, und dadurch mittels der sich addierenden Wirkungsbereiche ein virtueller kegelförmiger Beeinflussungsrahmen geschaffen wird. Dies kann insbesondere dann hilfreich sein, wenn die Außenkontur der verwendeten Saugvorrichtung selbst nicht kegelförmig ist, beispielsweise die Saugvorrichtung ein einfaches Saugrohr mit einer Öffnung am freien Ende ist, an dessen Außenumfang angeordnet und vorzugsweise radial nicht abstehend die Düsen angeordnet sind, z. B. in zwei oder drei in Längsrichtung beabstandeten Ebenen.

Die Druckluftdüsen werden vorzugsweise über eine zentrale Druckluftleitung mit Druckluft versorgt und von einem vorhandenen stationären Druckluftnetz aus mit Druckluft beliefert. Die zentrale Versorgungsleitung wird vorzugsweise an dem ebenfalls flexiblen Saugschlauch befestigt werden und sich zusammen mit diesem bewegen.

In einer bevorzugten Ausführungsform sind die Druckluftdüsen und deren Versorgungsleitungen an einer vorhandenen Saugvorrichtung, insbesondere einem Saugkopf, nachrüstbar, beispielsweise mit Hilfe von Haltebügeln oder Oberseite, Außenseite oder Unterseite des Saugkopfes aufschraubbar oder anderweitig befestigbar.

Der Druck des Druckluftnetzes wird für die Verwendung an den Druckluftdüsen mittels eines einstellbaren Reduzierventils gemindert.

Vorzugsweise können alle Funktionen der Druckbeaufschlagung mittels einer Steuerung, vorzugsweise einer elektrischen Steuerung, geregelt werden. Im einfachen Fall jedoch wird keine elektrische Steuerung benötigt, sondern die Unterdruckbeaufschlagung im Saugschlauch öffnet ihrerseits direkt das Druckluftventil für die Versorgung der Druckluftdüsen, während die Stärke der Druckminderung manuell durch die Einstellung am Druckminderungsventil vorgegeben wird. Pulsierender Strahl und ggf. auch rotierender Strahl können allein durch die konstruktive Gestaltung der Düsen vorgegeben sein, wobei die Düsen zusätzlich mechanisch manuell umstellbar sein können, z. B. zwischen permanentem Strahl und pulsierendem Strahl, zwischen stillstehendem Strahl und rotierendem Strahl.

Falls eine elektrische Steuerung verwendet wird, ist diese integriert in die üblicherweise bereits vorhandene elektrische Steuerung, welche die Absaugvorrichtung, den Hebemechanismus für den Saugkopf und/oder den Hebemechanismus für den Behälter steuert.

Eine Möglichkeit, die von der Saugvorrichtung bearbeitete Grundfläche zu vergrößern, besteht darin, die Saugvorrichtung im Behälter horizontal zu bewegen, z. B. kreisen zu lassen. Eine andere Möglichkeit besteht darin, die Saugvorrichtung in ihrem Durchmesser sehr groß auszugestalten und zu diesem Zweck vorzugsweise mehrere Absaugöffnungen über die Grundfläche verteilt anzuordnen, die entweder jede für sich so klein sind, dass die Gesamtfläche der Absaugöffnungen kleiner ist als der Querschnitt des zentralen, abfördernden Saugschlauches oder die einzelnen Absaugöffnungen periodisch nacheinander, aber nie alle gleichzeitig, vom Unterdruck beaufschlagt werden.

### c) Ausführungsbeispiele

Ausführungsformen gemäß der Erfindung sind anhand der Zeichnungen nachfolgend näher beschrieben. Es zeigen:

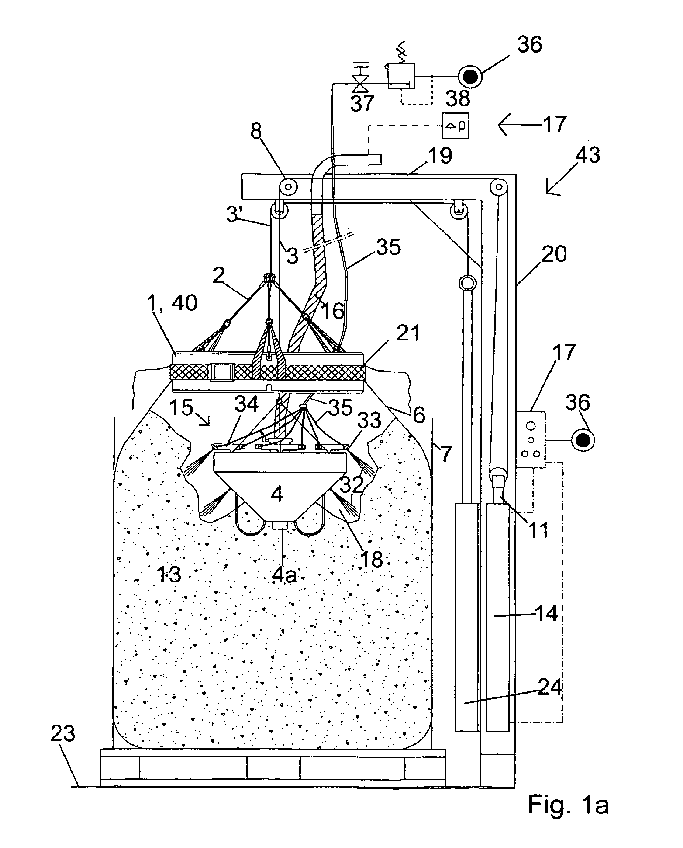

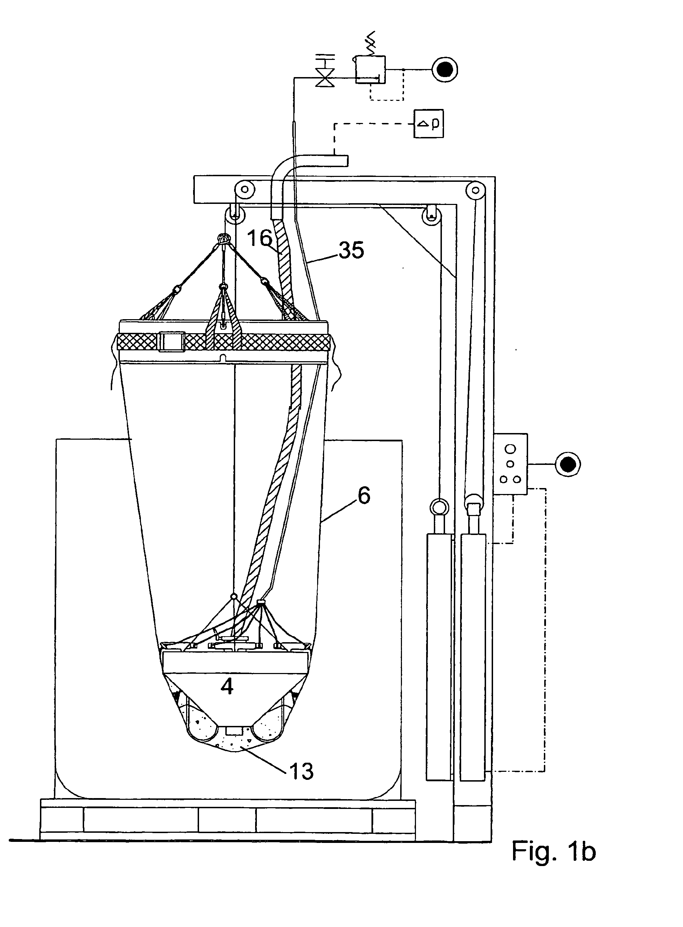

- Fig. 1 a:: das Entleeren des Behälters mittels eines auf der Unterseite kegelförmigen Saugkopfes, der mit Druckluftdüsen ausgestattet ist,
- Fig. 1 b:: denselben Behälter im fast vollständig entleerten und hochgezogenen Zustand,
- Fig. 2:: eine andere Bauform des Saugkopfes,
- Fig. 3:: eine einfache Sauglanze ausgestattet mit Druckluftdüsen mit Hebevorrichtung,
- Fig. 4: eine mit Druckluftdüsen ausgestattete Saulanze ohne Hebevorrichtung in einem schräg stellbaren Behälter,
- Fig. 5:: eine mechanisch rotierende Absaugöffnung,
- Fig. 6:: die Wirkung rotierender Druckluftstrahlen,
- Fig. 7:: ein Saugkopf mit mehreren Absaugöffnungen, und
- Fig. 8:: eine Detaillösung zur Querverlagerung.

In den Figuren 1 zeigen die Figuren 1 a und 1 b die jeweilige Entleervorrichtung in der Seitenansicht, einmal bei noch fast vollständiger Füllung des Behältnisses 6 mit Schüttgut 13 und einmal bei fast vollständig geleertem Behältnis 6.

Das Behältnis 6 ist dabei ein in einem Oktabin 7, also mit festen Behälterwänden, aufgenommenen Foliensack, der auf einer Palette unter dem Überbau der Entleervorrichtung steht. Die Entleervorrichtung umfasst dabei jeweils einen Halterahmen 1, der horizontal ringförmig zentrisch über dem sackförmigen Behältnis 6 angeordnet ist und den oberen Rand des Behältnisses 6 mittels eines Halteelements 21 in Form eines um den Halterahmen 1 umlaufenden Klemmgurtes festhält.

Der Halterahmen 1 wird mittels eines Seilzuges 3' nach oben gezogen, der über Umlenkrollen 9' entlang der Querstrebe 19 und der Vertikalstrebe 20 entlanggeführt ist und mit einem Behälterzylinder 24 verbunden ist, mit dessen Hilfe der Halterahmen 1 hochgezogen und damit - wie in Fig. 1b ersichtlich - dessen Seitenwände geradegezogen werden können.

Da der Halterahmen 1 einen geringeren Durchmesser als das Behältnis 6 im gefüllten Zustand besitzt, werden die Seitenwände des sackförmigen Behältnisses vor allem in dem Bereich oberhalb des Schüttgutes 13 nach innen gezogen, bis - gegen Ende des Entleervorganges - sie an dem Saugkopf 4 außen anliegen.

Der Saugkopf 4, von dem der Saugschlauch 16 nach oben wegführt, ist ebenfalls mittels eines Seilzuges 3, welcher über analoge Umlenkrollen 8, 9 geführt ist, zu einem weiteren Hubzylinder 14 geführt, welcher dem Anheben und Absenken des Saugkopfes dient.

Beide Zylinder 14, 24 sind vertikal an der Vertikalstrebe 20, insbesondere an deren vom Oktabin 7 abgewandten Rückseite, befestigt, und werden über eine Steuerung 17 angesteuert, die entweder an der Vertikalstrebe 20 oder an einem separaten Hängekabel befestigt ist.

Mittels der Steuerung 17 wird z.B. eingestellt, ob und wie oft der Saugkopf 4 aus dem Schüttgut 13 herausgezogen und erneut auf dieses abgesenkt wird, und/oder wie tief der Saugkopf 4 nach dem Aufsetzen auf der Oberfläche des Schüttgutes 13 versinken darf, bevor das Anheben und Herausziehen aus dem Schüttgut erfolgt, was ja jeweils mehrfach hintereinander durchgeführt wird.

Ferner kann an der Steuerung 17 einstellbar sein, aus welcher Höhe der Saugkopf 4 beim Aufsetzen auf die Oberfläche des Schüttgutes fallengelassen wird.

Um den Saugkopf 4 mittels des Seilzuges 3 über die gewünschte vertikale Distanz von knapp unterhalb der Querstrebe 19 bzw. 19' bis auf den Boden des Oktabins absenken zu können, ist der Seilzug 3 am Ende der Kolbenstange des Hubzylinders 14 nicht direkt befestigt, sondern an dessen Ende nur über eine weitere Rolle 26 geführt, und endet an einem ortsfesten Punkt.

Dadurch wird eine Übersetzung dergestalt erzielt, dass bei Verlagerung der Kolbenstange des Zylinders 14 um eine Längeneinheit der Saugkopf 4 um zwei Längeneinheiten bewegt wird.

Damit ist die Höhe der Vertikalstrebe 20 bzw. 20" ausreichend zur Befestigung eines etwa halb so langen Zylinders 14 daran, wenn somit die andere Hälfte der Höhe der Vertikalstrebe 20 bzw. 20" als Bewegungsweg der Rolle zur Verfügung steht.

Neu an dieser Entleervorrichtung ist, dass der Saugkopf 4 zusätzlich mit Druckluftdüsen 33 ausgestattet ist, die Druckluftstrahlen 32 vom Saugkopf 4 aus radial nach außen gegen das Schüttgut 13 richten, und zwar vorzugsweise schräg nach unten gerichtet, gegen die Wände des Saugloches 18, welches gebildet wird durch die Absaugung von Schüttgut 13 von oben her in der Mitte des Behälters.

Dadurch wird das Material an der Oberfläche der Wände des Absaugloches 18 gelockert und fließt entlang der Wände nach unten zum tiefsten Punkt des Absaugloches 18 und damit in den Bereich der Saugöffnung 4a des Saugkopfes 4, welcher sich am tiefsten Punkt des die Form eines umgekehrten Kegelstumpfes aufweisenden Saugkopfes 4 befindet und dort aufgrund seiner Vereinzelung (Fluidisierung) abgesaugt werden kann.

Dabei besteht das Ziel darin, einerseits immer ausreichend viel loses, also nicht zusammengeklebtes oder anderweitig verfestigtes Schüttgut 13 in den Bereich der Absaugöffnung 4a des Saugkopfes 4 zu bringen, und andererseits, das entstehende Saugloch 18 so groß wie möglich zu gestalten, um die verbleibenden außen herumstehenden Wände an Schüttgut 13 so dünn wie möglich zu bilden, was deren Einstürzen erleichtert, was durch Hochziehen des sackartigen Behältnisses 6 und damit nach innen drücken der Wände ständig oder in zeitlichen Abständen gefördert wird.

Am Saugkopf 4, nämlich entlang dessen Außenumfanges, sind mehrere Druckluftdüsen 33 in den Figuren 1 a und 1b in zwei verschiedenen vertikalen Ebenen angeordnet.

Alle Druckluftdüsen 33 werden über eine zentrale Versorgungsleitung 35, die vorzugsweise entlang des Saugschlauches 16 zum Saugkopf 4 geführt wird, mit Druckluft versorgt.

In der oberen Ebene sind die Saugdüsen 33 mittels Haltebügeln 34, die immer zwei oder mehr Düsen 33 tragen, entlang der oberen Umlaufkante des Saugkopfes 4 befestigt, beispielsweise indem die Haltebügel 34 auf der Oberseite des Saugkopfes 4 verschraubt sind, so dass die Düsen 33 knapp oberhalb der Oberkante positioniert sind.

Weitere Düsen 33 sind in einer zweiten, tieferliegenden Ebene entlang der Kegelfläche des Saugkopfes angeordnet. Es können noch in weiteren, einer z.B. dritten noch tieferliegenden Ebene, Düsen 33 angeordnet werden, die dann noch näher zur Saugöffnung 4a hin positioniert sind.

Die Düsen 33 sind dabei jeweils radial nach außen und schräg unten gerichtet, und vorzugsweise umso stärker nach unten gerichtet, je tiefer und näher an der Saugöffnung 4a sie an dem Saugkopf 4 angeordnet sind.

Mittels Unterstützung der Saugdüsen 33 arbeitet sich der Saugkopf 4 wie vorbeschrieben im Schüttgut 13 nach unten, wobei die das Saugloch 18 umgebenden Wände an Schüttgut 13 einstürzen bzw. zum Einsturz gebracht werden und nach unten nachrutschen, bis der quasi vollständig entleerte Zustand gemäß Fig. 1b erreicht ist, indem das sackartige Behältnis 6 am Außenumfang des Saugkopfes 4 anliegt und höchstens im verbleibenden Restabstand zwischen der Unterseite des Saugkopfes 4 und dem dort verlaufenden Behältnis 6 noch Reste an Schüttgut 13 in sehr kleiner Menge vorhanden sind.

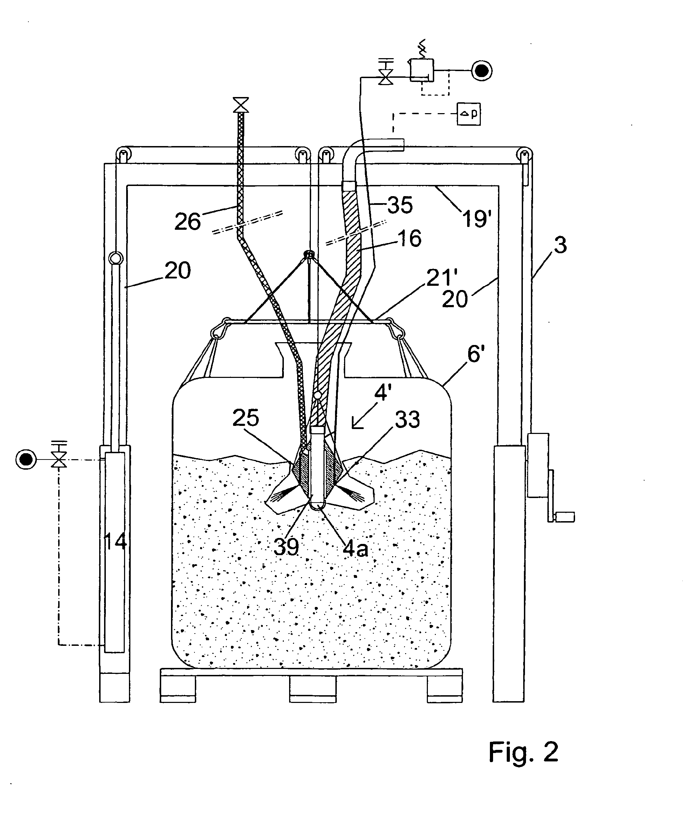

Demgegenüber zeigt Fig. 2 eine Entleervorrichtung, bei der das Traggestell 43 nicht nur aus einer Vertikalstrebe 20 und einer oben davon abstrebenden frei auskragenden Querstrebe 19 besteht, sondern portalförmig mit zwei aufstrebenden Vertikalstreben 20 und einer diese verbindenden, beidseitig befestigten Querstrebe 19' besteht.

Auch ist hier das Hebezeug 5, welches den Saugkopf 4' mittels eines Seilzuges 3 heben und senken kann, mittels einer Handkurbel antreibbar. Auch das Halteelement 21' ist etwas anders gestaltet, nämlich als Ring mit Karabinern zum Einhängen der Tragegriffe des als Behältnis 6' hier verwendeten Big-Bags.

Der Saugkopf 4' ist ebenfalls anders gestaltet, und besteht im Wesentlichen aus einer Sauglanze 39, also einem Rohrstück, dessen offenes unteres Ende die Saugöffnung 4a darstellt, und an dessen oberes Ende der flexible Saugschlauch 16 angeschlossen ist.

Um die Sauglanze 39 herum ist ein Gewicht 25 angeordnet, in Form einer Hülse mit im Längsschnitt kegeligem oder wie gezeichnet doppelt-kegeligem Querschnitt, um wiederum eine kegelförmige Unterseite ähnlich wie beim Saugkopf 4 der Fig. 1a/b zu erhalten, was das Nachfließen von Schüttgut zur unteren Saugöffnung 4a erleichtert.

Auch hier sind Druckluftdüsen 33, die schräg nach außen unten weisen, an der Oberfläche, in diesem Fall der nach unten gerichteten Kegelfläche des Gewichtskörpers 25 des Saugkopfes 4' - diesmal nur in einer einzigen vertikalen Ebene umlaufend - angeordnet. Die Düsen 33 können dabei über Leitungen oder Bohrungen im Inneren des Gewichtskörpers 25 mit der von der Versorgungsleitung 35 gelieferten Druckluft versorgt werden.

Im Übrigen entspricht die Entleervorrichtung und vor allem hinsichtlich deren Druckluftausstattung derjenigen der Figuren 1.

Als weitere Besonderheit ist in Figur 2 aufgrund einer nur kleinen oberen Öffnung des Behälters 6' eine Zuluftleitung 26 von außerhalb des Behälters 6' zum Saugkopf 4' geführt, welche Zuluft nahe der Saugöffnung 4a zur Verfügung stellt, um zu vermeiden, dass der Saugvorgang unterbrochen wird wegen einem Mangel an nachströmender Luft.

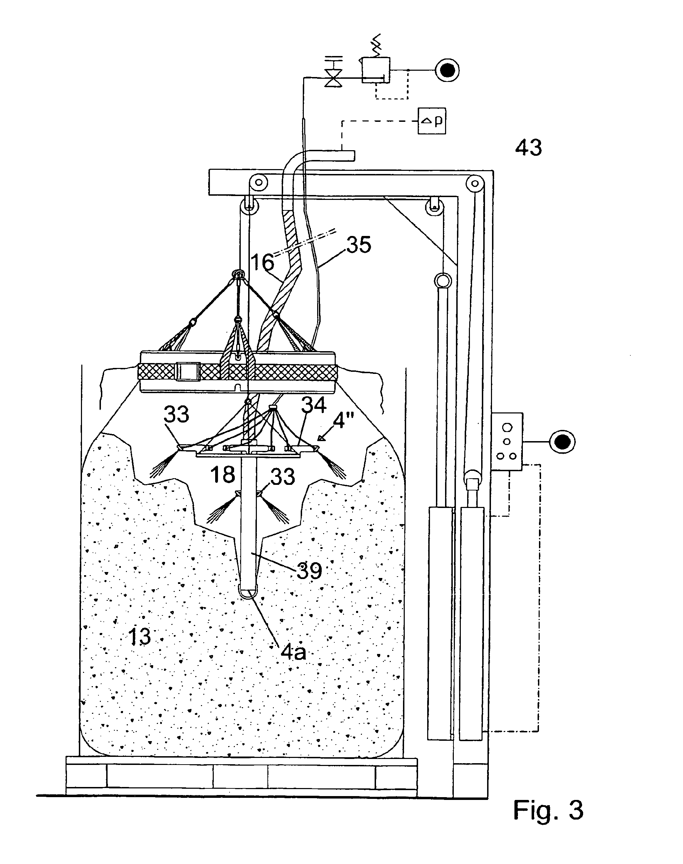

Figur 3 zeigt eine Entleervorrichtung, bei der zwar das Traggestell 43 und auch die Druckluftversorgung derjenigen der Figur 1 entspricht, jedoch der Saugkopf 4" anders gestaltet ist:
Auch in diesem Fall - wie bei Figur 2 - besteht der Saugkopf im Wesentlichen aus einer Sauglanze 39, an welche der Saugschlauch 16 angeschlossen ist.

An der Sauglanze 39 ist jedoch werden ein Gewicht noch ein eine spezielle Außenkontur bildender Formkörper befestigt, sondern in zwei übereinander angeordneten Ebenen sind an der Sauglanze 39 in jeder Ebene jeweils über dem Umfang verteilt mehrere Saugdüsen 33 an der Sauglanze 39 angeordnet, und zwar von unten nach oben mit zunehmendem radialen, horizontalen Abstand von der in Figur 3 senkrecht stehenden Sauglanze 39.

In der unteren Ebene sind die Düsen 33 von dem unteren Ende, also der Saugöffnung 4a, nach oben versetzt umlaufend direkt auf dem Außenumfang der Sauglanze 39 angeordnet.

In der oberen Ebene sind die Düsen 33 radial nach außen beabstandet, in vertikaler Richtung etwa auf Höhe des Überganges zwischen Sauglanze 39 und flexiblem Saugschlauch 16, angeordnet, beispielsweise wieder mittels der in Figur 1 erwähnten Haltebügel 34, die auf einem die Sauglanze 39 umgebenden Ring oder Kreisplatte befestigt sein können und daher - wie bei der Lösung gemäß Figur 1 oder 2 - an einem herkömmlichen Saugkopf 4, 4' nachrüstbar sind.

Durch die zunehmend nach oben radiale Beabstandung der Düsen 33 von der Mittelachse und damit der Sauglanze 39 befinden sich die Düsen 33 auf einer virtuellen nach unten gerichteten Kegelfläche, was ebenfalls wieder das Nachrutschen an Schüttgut auf der Oberseite eines ebenfalls sich meist kegelförmig ausbildenden Saugloches 18 erleichtert.

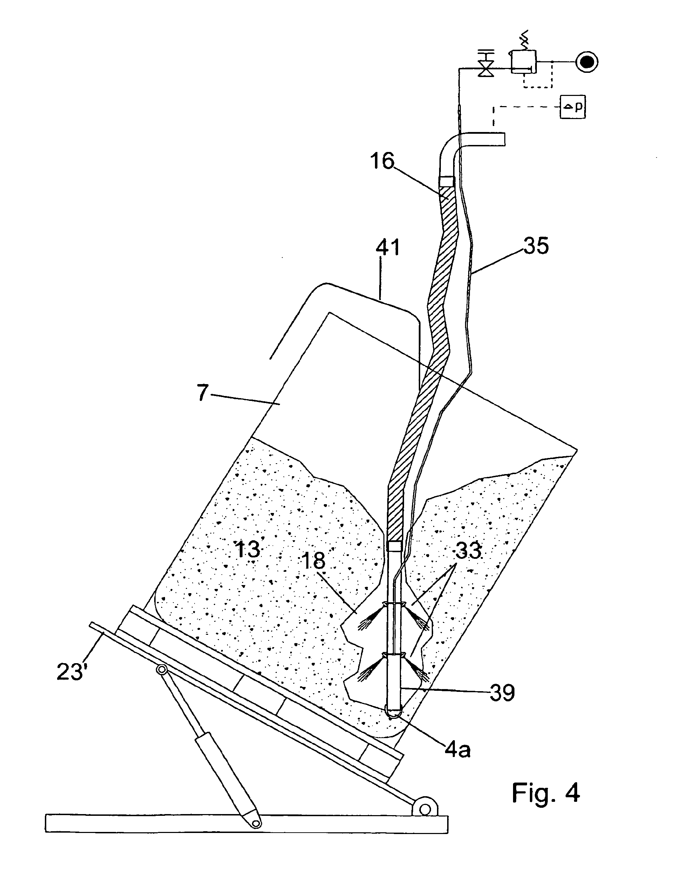

Dagegen zeigt Figur 4 anschaulich, dass sich ein solches kegelförmiges Absaugloch 18 nicht ausbildet, wenn wie in Figur 4 in mehreren Ebenen an z.B. der Sauglanze 39 übereinander angeordneten Düsen 33 jeweils den gleichen seitlichen radialen Abstand zur Mittelachse und damit der Sauglanze 39 besitzen, indem sie wie in Figur 4 direkt auf dem Außenumfang der Sauglanze 39 angeordnet sind.

Dann ergibt sich ein eher kegelförmiges Saugloch 18 um die Sauglanze 39 herum, was in vielen Anwendungsfällen nicht die optimale Form darstellt.

Selbst mit einer radial nicht gestaffelten Anordnung der Düsen 33 kann jedoch die Ausbildung eines kegelförmigen Saugloches erzielt werden, nämlich dann, wenn die höherliegenden Düsen 33 einen radial größeren Wirkungsbereich besitzen als die tieferliegenden und dadurch ein virtuell kegelförmiger Wirkungsbereich in Summe der in mehreren Ebenen übereinander angeordneten Düsen 33 erzielt wird.

Zusätzlich unterscheidet sich die Lösung gemäß Figur 4 von derjenigen der Figuren 1 bis 3 dadurch, dass in Figur 4 der aus einer Sauglanze 39 bestehende Saugkopf, der wie in den Figuren 1 bis 3 mit einem flexiblen Saugschlauch in Verbindung steht und dessen Druckluftdüsen 33 mittels einer DruckluftVersorgungsleitung 35 versorgt werden, weder selbst an einem anhebbaren Hebezeug befestigt ist, noch das Behältnis an einem Hebezeug befestigt ist, welches im vorliegenden Fall aus einem Oktabin 7 mit festen Umfangswänden besteht.

Dementsprechend ist auch kein Traggestell für diese Hebezeuge vorhanden, sondern der Oktabin 7 steht auf einer Grundplatte 23', die mittels eines z.B. Hydraulikzylinders schräg gekippt werden kann, so dass eine der Unterkanten des Oktabins 7 dessen tiefsten Punkt darstellt, an dem sich gegen Ende des Füllungszustandes die Reste an Schüttgut 13 sammeln. Die Schrägstellung wird erst nach teilweiser Entleerung des Oktabins 7 durchgeführt.

Um die in den Oktabin 7 gestellte Sauglanze 39 in Ermangelung eines Hebezeuges wenigstens einigermaßen in Position zu fixieren, ist an der Sauglanze 39 und/oder dem darüber folgenden Saugschlauch 16 eine Einhängevorrichtung 41, z.B. in Form eines Einhängebügels, angeordnet, mittels welcher die Sauglanze an der Oberkante des Oktabins 7 eingehängt werden kann.

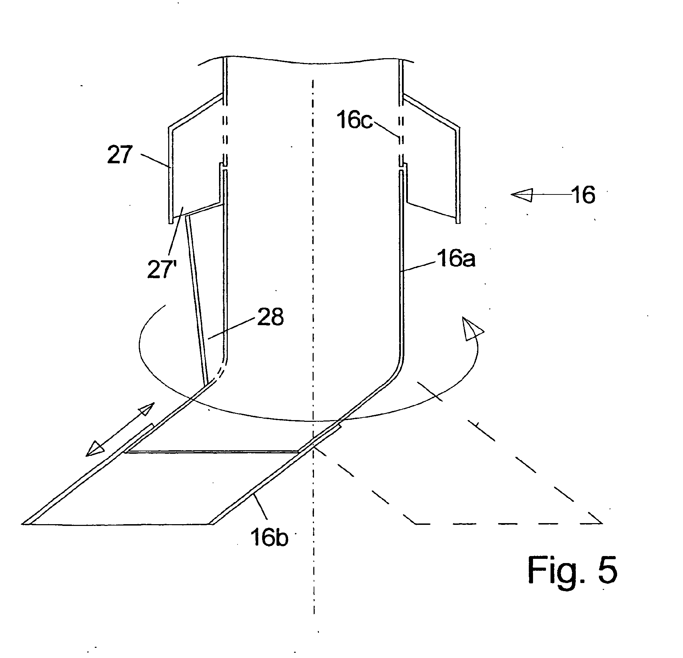

Fig. 5 zeigt eine Lösung mit Saugrohr 16, wobei sich vorzugsweise an den nach unten außen gekrümmten Abschnitt 16a ein teleskopierbarer Abschnitt 16b zur Vergrößerung des Wirkradius anschließt. Zusätzlich ist der Abschnitt 16a gegenüber einem festen, stromaufwärts liegenden Schlauchabschnitt bzw. Rohrabschnitt 16c drehbar befestigt mittels eines Leitrades 27 mit Leitschaufeln 27'. Die Leitschaufeln 27' sind so gekrümmt, dass ein darüber geführter Luftstrahl, der in Form z.B. eines Bypasses 28 der Druckluftversorgungsleitung 35 über das Leitrad 27 geführt wird und dadurch ein umfangsförmiger Rückstoßeffekt dieses über den Bypass geführten Stromes gegenüber den Leitschaufeln 27' eintritt, die den beweglichen Teil des Saugrohrs 16 in Drehung versetzen.

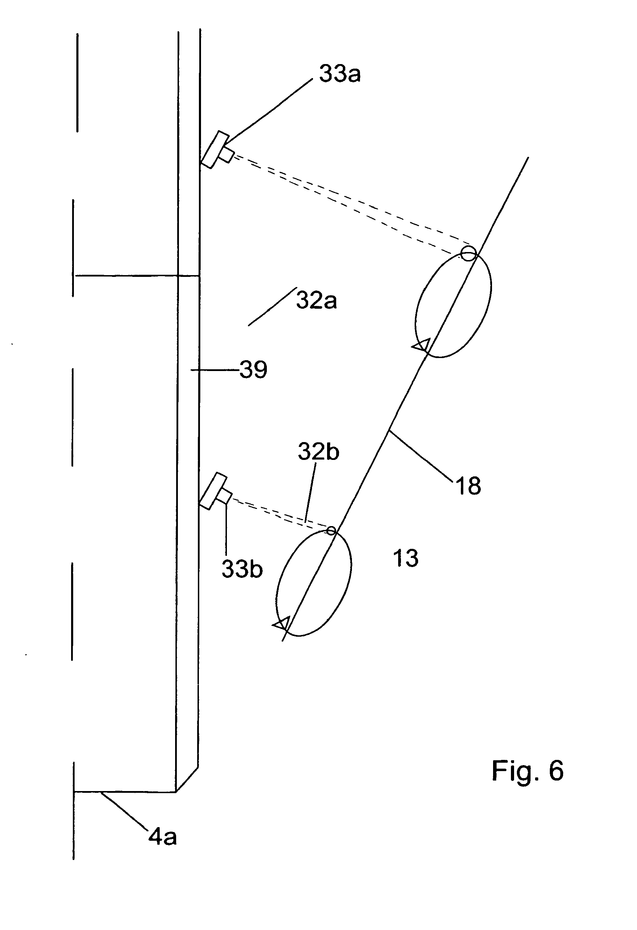

Figur 6 zeigt weiterhin in Detaildarstellung - dargelegt am Beispiel von Druckluftdüsen 33, die sich direkt auf dem Außenumfang einer Sauglanze 39 befinden, jedoch nicht hierauf beschränkt - einerseits die Wirkungsweise der unterschiedlich weit radial nach außen wirkenden Druckluftstrahlen 32, wobei die oberen Druckluftstrahlen 32a der oberen Düsen 33a radial weiter nach außen wirken als die unteren Strahlen 32b und hierdurch die erwähnte Kegelform des Saugloches 18 erzielt wird trotz nicht-kegelförmiger Anordnung der Düsen 33a, b.

Zusätzlich ist dort der möglichst punktförmige, also möglichst spitzkegelige, Druckluftstrahl 32a nicht immer in die gleiche Richtung gerichtet, sondern läuft ringförmig um eine Mittelachse um und bearbeitet damit eine wesentlich größere Kreisfläche bzw. Kreisringfläche auf der Oberfläche des Saugloches 18, als es dem Querschnitt des Druckluftstrahles 32a, b direkt entspricht. Zusätzlich und/oder stattdessen kann der Druckluftstrahl 32 auch pulsieren, um bei vermindertem Druckluftverbrauch eine annähernd gleich gute Wirkung zu erzielen.

Beide Wirkungen, Pulsierung und kegelförmiges Umlaufen, können natürlich auch bei allen anderen körperlichen Bauformen, insbesondere gemäß der Figuren 1 bis 4, verwirklicht werden.

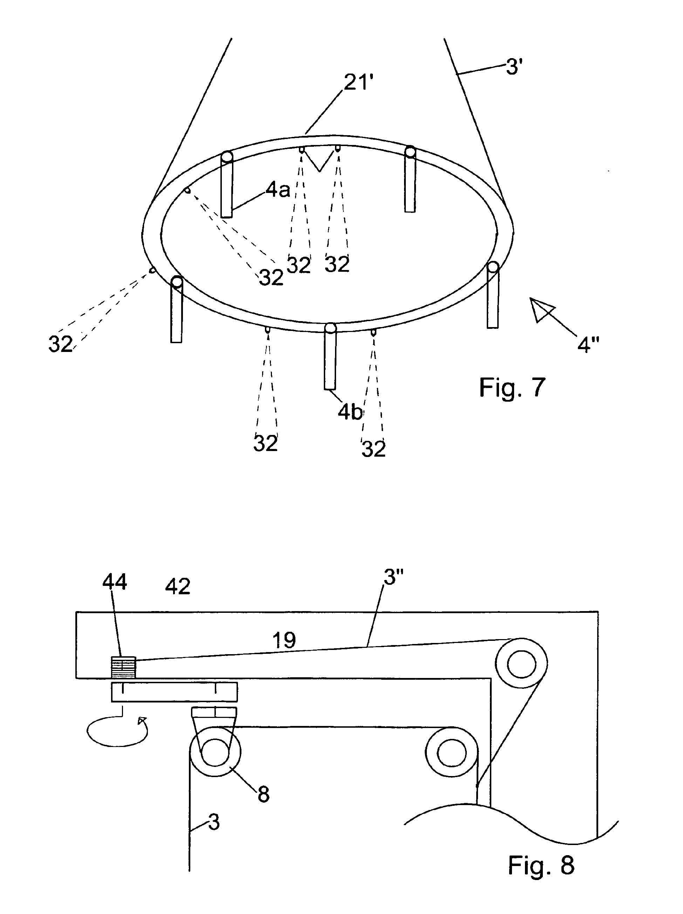

Figur 7 zeigt eine Bauform, bei der an einem z.B. ringförmigen Halteelement 21' mehrere Ansaugöffnungen 4a, b ringförmig über eine größere Grundfläche verteilt und ggf. auch in unterschiedlicher Höhenlage, z.B. entlang eines virtuellen Kegels, als Saugkopf 4" angeordnet sind:

Beispielsweise können an dem ringförmigen Halteelement 21' nach unten ragende Rohrstutzen befestigt sein, deren freie untere Enden die Saugöffnungen 4a, b... sind, oder an einem wie in Figur 1 umgekehrt kegelstumpfförmigen Saugkopf 4 können über den Umfang verteilt mehrere Absaugöffnungen 4a, b... - eventuell auch in mehren Höhenlagen - vorhanden sein.

Zusätzlich sind an dem Halteelement 21' wiederum Druckluft-Düsen 33 angeordnet, die die Umgebung der Saugöffnungen 4a, b... mit Druckluft beaufschlagen um das dortige Schüttgut 13 zu lösen und zu den Saugöffnungen 4a, b... fließen zu lassen.

Dabei sind die Saugöffnungen 4a, b... vorzugsweise mit einem - nicht dargestellten - zentralen Saugschlauch verbunden, wobei entweder die Summe der Querschnitte der Saugöffnungen 4a, b... kleiner ist als der Querschnitt dieses gemeinsamen Saugschlauches 16 oder die einzelnen Saugöffnungen 4a, b... werden abwechselnd vom Unterdruck des zentralen Saugschlauches beaufschlagt.

Das Halteelement 21' kann gleichzeitig zum Befestigen des oberen Randes des Behälters 6 dienen, der mit Hilfe des Seiles 3' gestrafft und hochgezogen werden kann, natürlich im Wechsel mit dem Absenken der Ansaugöffnungen 4a, b... auf die Oberfläche des Schüttgutes 13.

Figur 8 zeigt in Detaildarstellung zu den Figuren 1 a, b eine Möglichkeit, um die Umlenkrolle 8 für das Seil 3 des Saugkopfes in der horizontalen Ebene kreisförmig umlaufen zu lassen, ohne dass dadurch der Saugkopf 4 selbst um seine eigene Achse dreht. Dadurch ist es möglich, den Saugkopf 4 innerhalb des Behälters 6 einen größeren Arbeitsbereich als bei horizontal unveränderter Position abarbeiten zu lassen.

Dies ist möglich, indem die letzte Umlenkrolle 8 für den Seilzug 3 des nicht dargestellten Saugkopfes nicht direkt an der Unterseite der Querstrebe 19 befestigt ist, sondern an der Unterseite einer Drehplatte 42 exzentrisch und drehbar befestigt ist, die ihrerseits wiederum drehbar z.B. an der Unterseite der Querstrebe 19 drehbar gelagert ist.

Um die Drehplatte 42 und damit den Saugkopf 4 in eine kreisende Bewegung zu versetzen, kann ein Drehantrieb der Drehplatte 42 auf sehr einfache Art und Weise zum Beispiel dadurch realisiert werden, dass mit der Drehplatte 42 eine Seilwickelrolle 44 drehfest verbunden ist, auf welche ein Seil 3" aufgewickelt ist, welches an irgendeiner geeigneten Stelle mit dem Seil 3 zum Heben und Senken des Saugkopfes verbunden ist.

Beim Heben und Senken des Saugkopfes wickelt sich das Seil 3" auf der Wickelrolle 44 auf oder ab, wozu die Wickelrolle 44 in Aufwickelrichtung von einer nicht dargestellten Feder, beispielsweise einer spiralförmig gewickelten Flachspiralfeder, vorgespannt ist, so dass der mit radial zur Seite wirkenden Druckluftdüsen ausgestattete Saugkopf sich spiralförmig nach unten in den Behälter und das Schüttgut 13 hinein absenkt, wodurch nur sehr dünne Umfangswände des Schüttgutes 13 bestehen bleiben, die leicht einstürzen bzw. zum Einsturz gebracht werden können.

### BEZUGSZEICHENLISTE

- 1: Halterahmen
- 2: Seile
- 3: Seilzug
- 4: Saugkopf
- 4a: Saugöffnung
- 5: Hebezeug
- 6: Behältnis
- 7: Oktabin
- 8: Umlenkrolle
- 9: Umlenkrolle
- 11: Kolbenstange
- 13: Schüttgut
- 14': Hubzylinder
- 15: Absaugvorrichtung
- 16: Saugschlauch
- 17,: 17' Steuerung
- 18: Absaugloch
- 19: Querstrebe
- 20: Vertikalstrebe
- 21: Halteelemente
- 22: Kante
- 23,23': Grundplatte
- 24: Behälterzylinder
- 25: Gewicht
- 26: Zuluftleitung
- 27: Leitrad
- 28: Bypass
- 31: Rand
- 32: Druckluftstrahl
- 33: Düsen
- 34: Haltebügel
- 35: Versorgungsleitung
- 36: Druckluftnetz
- 37: Reduzierventil
- 38: Unterdruck
- 39: Sauglanze
- 40: Tragring
- 41: Einhängevorrichtung
- 42: Drehplatte
- 43: Traggestell
- 44: Wickelrolle

## Patentansprüche

1. Verfahren zum Entleeren von Schüttgut (13) aus flexiblen, insbesondere sack- oder beutelartigen Behältnissen (6,6') mittels einer Absaugvorrichtung (15), wobei
- die Absaugvorrichtung (15) auf die Oberfläche des Schüttgutes (13) aufgelegt wird,
- ein Einsinken der Absaugvorrichtung (15) in das Schüttgut (13) aufgrund Absaugens von Schüttgut (13) durch die Absaugvorrichtung (15) hingenommen wird,
- die Absaugvorrichtung (15) mit Unterdruck beaufschlagt wird und die Oberfläche des sich bildenden Absaugloches (18) im Schüttgut (13) in der Umgebung der Absaugvorrichtung (15) durch Beaufschlagen mittels Druckluft aus wenigstens einer Druckluftaustrittsöffnung gelockert wird,
**dadurch gekennzeichnet, dass**
- die Beaufschlagung mit Druckluft nur aktiviert wird, wenn die Absaugvorrichtung (15) mit Unterdruck beaufschlagt wird und
- das geförderte Luftvolumen pro Zeiteinheit der Unterdruckbeaufschlagung der Absaugvorrichtung (15) größer ist als dasjenige der Druckluftbeaufschlagung,

2. Verfahren nach einem der vorhergehenden Ansprüche,
**dadurch gekennzeichnet, dass**
die Beaufschlagung mittels Druckluft im aktivierten Zustand nicht permanent, sondern stoßweise erfolgt.

3. Verfahren nach einem der vorhergehenden Ansprüche,
**dadurch gekennzeichnet, dass**
die Beaufschlagung mittels Druckluft hinsichtlich Dauer und Abstand der einzelnen Druckluft-Schüsse manuell einstellbar ist, insbesondere abhängig von der Art des Schüttgutes (13), oder automatisch gesteuert wird in Abhängigkeit von der durch den Saugschlauch (16) abgeführten Menge an Schüttgut (13) pro Zeiteinheit.

4. Verfahren nach einem der vorhergehenden Ansprüche,
**dadurch gekennzeichnet, dass**
die Absaugvorrichtung (15) im Absaugloch (18) angehoben und anschließend wieder auf die Oberfläche des Schüttgutes (13) abgesenkt wird, und diese Schritte automatisch und mehrfach hintereinander durchgeführt werden.

5. Verfahren nach einem der vorhergehenden Ansprüche,
**dadurch gekennzeichnet , dass**
die Absaugvorrichtung (15) während der Druckluftbeaufschlagung in horizontaler Richtung verlagert wird.

6. Verfahren nach einem der vorhergehenden Ansprüche,
**dadurch gekennzeichnet , dass**
beim Absenken der Absaugvorrichtung (15) auf die Oberfläche des Schüttgutes (13) die Absaugvorrichtung (15) in wenigstens einer Querrichtung zur Vertikalen innerhalb des Bereiches der Oberfläche des Schüttgutes (13) verlagert wird.

7. Vorrichtung zum Entleeren von Schüttgut (13) aus flexiblen, insbesondere sack- oder beutelartigen Behältnissen (6,6') mittels einer Absaugvorrichtung (15), wobei die Absaugvorrichtung (15) auf dem Schüttgut (13) aufliegt bzw. in einem bereits gebildeten Absaugloch (18) des Schüttgutes (13) liegt und an der Absaugvorrichtung (15) wenigstens eine Druckluft-Austrittsöffnung mit Strahlrichtung gegen das umgebende Schüttgut (13) angeordnet ist
**dadurch gekennzeichnet, dass**
- das geförderte Luftvolumen pro Zeiteinheit der Unterdruckbeaufschlagung der Absaugvorrichtung (15) größer ist als dasjenige der Druckluftbeaufschlagung und
- eine Steuerung (17') vorhanden ist, die die Beaufschlagung mit Druckluft nur aktiviert, wenn die Absaugvorrichtung (15) mit Unterdruck beaufschlagt ist.

8. Vorrichtung nach einem der vorhergehenden Vorrichtungsansprüche,
**dadurch gekennzeichnet, dass**
- die Absaugvorrichtung (15) ein Saugkopf (4) mit kegelförmiger Unterseite ist und die Absaugdüsen (33) an der Oberkante des Saugkopfes (4) über den Umfang verteilt sind, und
- an der Kegelfläche des Saugkopfes (4) Druckluft-Düsen (33) über den Umfang verteilt angeordnet sind.

9. Vorrichtung nach einem der vorhergehenden Vorrichtungsansprüche,
**dadurch gekennzeichnet, dass**
die Vorrichtung eine Steuerung (17') mit einem Unterdrucksensor (38) umfasst, der die Unterdruckbeaufschlagung der Absaugvorrichtung (15) feststellt, und mit der Steuerung (17') wirkverbunden ist

10. Vorrichtung nach einem der vorhergehenden Vorrichtungsansprüche,
**dadurch gekennzeichnet, dass**
die Düsen (33) selbsttätig ihre Strahlrichtung ändern.

11. Vorrichtung nach einem der vorhergehenden Vorrichtungsansprüche,
**dadurch gekennzeichnet, dass**
- ein Hebezeug (5) vorhanden ist, umfassend einen ringförmigen oder mehreckigen Halterahmen (1), der mit dem oberen Randbereich des Behältnisses (6) in Halteeingriff gebracht wird, wobei
- das Hebezeug (5) mittels einer Hubeinrichtung (12) in vertikaler Richtung bewegt wird, um das Behältnis (6) zu strecken, und
- das Hebezeug (5) eine Steuerung (17) umfasst, die in der Lage ist, die Absaugvorrichtung (15) abwechselnd auf der Oberfläche des Schüttgutes (13) aufzulegen und dort hinein absinken zu lassen und anschließend die Absaugvorrichtung (15) vorübergehend wieder über die Oberfläche des Schüttgutes (13) anzuheben.

12. Vorrichtung nach einem der vorhergehenden Vorrichtungsansprüche,
**dadurch gekennzeichnet, dass**
die Vorrichtung eine Querverlagerungseinheit zum Verlagern des Saugkopfes (15) in wenigstens einer horizontalen Querrichtung im Grundflächenbereich des Behältnisses (6) umfasst.

## Claims

1. A method for emptying bulk material (13) from flexible, in particular, sack or bag type containers (6, 6') through a suction device (15), wherein
- the suction device (15) is placed onto the surface of the bulk material (13);
- a sinking of the suction device (15) into the bulk material (13) due to evacuating bulk material (13) through the suction device (15) is accepted;
- the suction device (15) is loaded with vacuum and the surface of the evacuation hole (18) forming in the bulk material adjacent to the suction device (15) is loosened by loading it with compressed air from at least one compressed air outlet opening,
wherein
- the compressed air loading is only activated when the suction device (15) is loaded with vacuum, and
- the supplied air volume per unit time of vacuum loading of the suction device (15) is greater than the supplied air volume of the compressed air loading.

2. A method according to one of the preceding claims, wherein the compressed air loading is not performed permanently in activated condition, but in bursts.

3. A method according to one of the preceding claims, wherein the compressed air loading is manually adjustable with respect to the duration and time lag of the particular compressed air burst, in particular as a function of the type of bulk material (13), or automatically controlled as a function of the volume of bulk material (13) removed through the suction hose (16) per unit time.

4. A method according to one of the preceding claims, wherein the suction device (15) is raised in the suction hole (18) and subsequently lowered onto the surface of the bulk material (13) again, and the steps are automatically performed again multiple times, one after the other.

5. A method according to one of the preceding claims, wherein the suction device (15) is moved in horizontal direction during compressed air loading.

6. A method according to one of the preceding claims, wherein the suction device (15) is being moved in at least one transversal direction to the vertical within the portion of the surface of the bulk material (13) during lowering of the suction device (15) onto the surface of the bulk material (13).

7. A device for emptying bulk material (13) from flexible, in particular, sack or bag type containers (6, 6'), through a suction device (15), wherein the suction device (15) sits on the bulk material or in a suction hole hole (18), which has already formed in the bulk material (13), and at least one compressed air exit opening with jet its direction against the surrounding bulk material (13) is disposed at the suction device (15), wherein
- the supplied air volume per unit time of vacuum loading of the suction device (15) is greater than the air volume of compressed air loading, and
- a control (17') is provided, which only activates the compressed air loading when the suction device (15) is loaded with vacuum.

8. A device according to one of the preceding device claims, wherein
- the suction device (15) is a suction head (4) with conical bottom and the suction nozzles (33) are arranged at the top edge of the suction head (4) and distributed over the circumference; and
- compressed air nozzles (33) are disposed at the conical surface of the suction head (4) and distributed over the circumference.

9. A device according to one of the preceding device claims, wherein the device comprises a control (17') with a vacuum sensor (38), which detects the vacuum loading of the suction device (15) and which is operatively connected to the control (17').

10. A device according to one of the preceding device claims, wherein the nozzles (33) change their jet directions self-acting.

11. A device according to one of the preceding device claims, wherein
- a hoisting device (5) is provided, comprising an annular or polygonal support frame (1), which is brought into supporting engagement with the upper edge portion of the holder (6), wherein
- the hoisting device (5) is moved in vertical direction through a lifting device (12) in order to stretch the container (6), and
- the lifting device (5) comprises a control (17), which is capable to place the suction device (15) onto the surface of the bulk material (13), to let it sink into the surface in an alternating manner, and to subsequently raise the suction device (15) again over the surface of the bulk material (13) temporarily.

12. A device according to one of the preceding device claims, wherein the device comprises a transversal movement unit for moving the suction head (15) in at least one horizontal transversal direction in the base surface portion of the container (6).

## Revendications

1. Procédé pour l'évacuation de matière en vrac (13) hors de récipients flexibles en particulier sous forme de sac ou sachet (6, 6) au moyen d'un dispositif d'aspiration (15),
- le dispositif d'aspiration (15) étant appliqué sur la surface de la matière en vrac (13),
- un enfoncement du dispositif d'aspiration (15) dans la matière en vrac (13) en raison de l'aspiration de la matière en vrac (13) par le dispositif d'aspiration (15) étant accepté,
- le dispositif d'aspiration (15) subissant une dépression et la surface du trou d'aspiration (18) en formation est relâchée dans la matière en vrac (13) dans l'environnement du dispositif d'aspiration (15) par impact d'air comprimé d'au moins une ouverture de sortie d'air comprimé,
**caractérisé en ce que**
- l'impact de l'air comprimé n'est activé que si le dispositif d'aspiration (15) subit une dépression et
- le volume d'air transporté par unité de temps de l'impact de dépression du dispositif d'aspiration (15) est supérieur à celui de l'impact de l'air comprimé.

2. Procédé selon l'une des revendications précédentes, **caractérisé en ce que** l'impact de l'air comprimé s'effectue à l'état activé non pas de manière permanente mais par saccade.

3. Procédé selon l'une des revendications précédentes, **caractérisé en ce que** l'impact au moyen de l'air comprimé est réglable manuellement en terme de durée et d'intervalle entre les envois d'air comprimé, en particulier en fonction du type de matière en vrac (13) ou bien commandé automatiquement en fonction de la quantité de matière en vrac (13) évacuée par le tuyau d'aspiration (16) par unité de temps.

4. Procédé selon l'une des revendications précédentes, **caractérisé en ce que** le dispositif d'aspiration (15) est soulevé dans le trou d'aspiration (18) et est ensuite abaissé à nouveau sur la surface de la matière en vrac (13) et ces étapes sont effectuées automatiquement et plusieurs fois les unes derrière les autres.

5. Procédé selon l'une des revendications précédentes, **caractérisé en ce que** le dispositif d'aspiration (15) est déplacé horizontalement pendant l'impact de l'air comprimé.

6. Procédé selon l'une des revendications précédentes, **caractérisé en ce que** lors de l'abaissement du dispositif d'aspiration (15) sur la surface de la matière en vrac (13), le dispositif d'aspiration (15) est déplacé au moins dans une direction transversale par rapport à la verticale à l'intérieur de la zone de la surface de la matière en vrac (13).

7. Dispositif pour l'évacuation de matière de vrac (13) hors de récipients flexibles (6, 6') en particulier sous forme de sac ou de sachet, au moyen d'un dispositif d'aspiration (15), le dispositif d'aspiration (15) reposant sur la matière en vrac (13) respectivement se trouve dans un trou d'aspiration (18) déjà formé de la matière en vrac (13) et il est disposé sur le dispositif d'aspiration (15) au moins une ouverture de sortie d'air comprimé avec une direction de jet vers la matière en vrac environnante (13),
**caractérisé en ce que**
le volume d'air transporté par unité de temps de l'impact de dépression du dispositif d'aspiration (15) est supérieur à celui de l'impact de l'air comprimé et
- il est prévu une commande (17") qui active l'impact de l'air comprimé que si le dispositif d'aspiration (15) subit une dépression.

8. Dispositif selon l'une des revendications précédentes, **caractérisé en ce que**
- le dispositif d'aspiration (15) est une tête d'aspiration (4) avec une face inférieure en forme de cône et les buses d'aspiration (33) sont réparties sur la périphérie sur le bord supérieur de la tête d'aspiration (4) et
- des buses d'air comprimé (33) sont réparties sur la périphérie sur la surface conique de la tête d'aspiration (4).

9. Dispositif selon l'une des revendications précédentes, **caractérisé en ce que** le dispositif comprend une commande (17") avec un capteur de dépression (38), qui détermine l'impact de dépression du dispositif d'aspiration (15) et qui est reliée activement à la commande (17").

10. Dispositif selon l'une des revendications précédentes, **caractérisé en ce que** les buses (33) modifient automatiquement leur direction de jet.

11. Dispositif selon l'une des revendications précédentes, **caractérisé en ce qu'**
- un outil de levage (5) est prévu qui comprend un cadre de soutien annulaire ou polygonal (1), qui est amené en engagement de support avec la zone supérieure de bordure du récipient (6),
- l'outil de levage (5) est déplacé au moyen d'un dispositif de levage (12) dans le sens vertical pour étirer le récipient (6), et
- l'outil de levage (5) comprend une commande (17) qui est en mesure d'appliquer en alternance le dispositif d'aspiration (15) sur la surface de la matière en vrac (13) et de l'y laisser s'enfoncer et ensuite de relever provisoirement le dispositif d'aspiration (15) au-dessus de la surface de la matière en vrac (13).

12. Dispositif selon l'une des revendications précédentes, **caractérisé en ce que** le dispositif comprend une unité de déplacement transversal pour le déplacement de la tête d'aspiration (15) dans au moins une direction transversale horizontale dans la zone de surface de base du récipient (6).
